# EUROPÄISCHE PATENTSCHRIFT

(11) **EP 1 669 158 B1**
(45) Veröffentlichungstag und Bekanntmachung des Hinweises auf die Patenterteilung: **11.04.2007**
(21) Anmeldenummer: 04028958.9
(22) Anmeldetag: 07.12.2004
(51) Int. Cl.: B23K 26/38, B23K 26/16, F02M 61/16, B23P 15/16, C23F 1/26

(54) **Verfahren zur Herstellung einer in einem Hohlraum eines Werkstückes mündenden Bohrung mittels Laserstrahlung mit chemischer Behandlung des Hohlraumes**
Process for laser manufacturing a hole emerging in an inner space of a workpiece with chemical treatment for cleaning the inner space
Procédé de fabrication par laser d'un trou débouchant dans un espace intérieur d'une pièce avec nettoyage par traitement chimique de l'espace intérieur

(43) Veröffentlichungstag der Anmeldung: 14.06.2006
(73) Patentinhaber: Delphi Technologies, Inc., Troy, MI 48007 (US)
(72) Erfinder: Wild, Michael J., Dr., 94469 Deggendorf (DE); Pilaski, Milan, Dr., 94469 Deggendorf (DE); Giedl-Wagner, Roswitha, Dr., 94469 Deggendorf (DE)
(74) Vertreter: Manitz, Finsterwald & Partner GbR

(56) Entgegenhaltungen:
- WO-A-20/04087364
- US-A- 4 559 115
- US-A- 5 222 617
- US-A- 5 462 638
- US-A- 6 070 813
- US-B1- 6 303 901

## Beschreibung

Die Erfindung betrifft ein Verfahren zur Herstellung einer in einen Hohlraum eines Werkstücks, insbesondere einer Kraftstoffeinspritzdüse, mündenden Bohrung gemäß dem Oberbegriff des Anspruchs 1 (siehe, z.B., US-A-6 070 813).

Bei einem derartigen, grundsätzlich bekannten Verfahren besteht die Gefahr, dass die Laserstrahlung, sobald sie nach Durchbohrung des Werkstücks in den Hohlraum eintritt, auf den dem Mündungsbereich gegenüberliegenden Wandabschnitt auftrifft und dort in unerwünschter Weise Material von der Wand abträgt. Um dies zu verhindern, wird das die Energie der in den Hohlraum eintretenden Laserstrahlung verringernde Schutzorgan in den Hohlraum eingeführt und zwischen dem Mündungsbereich und dem gegenüberliegenden Wandabschnitt angeordnet.

Beruht die Verringerung der Energie der Laserstrahlung auf einer zumindest teilweisen Absorption und/oder Dissipation der Laserstrahlung durch das Schutzorgan, so führt die Bestrahlung des Schutzorgans zu einer Erwärmung desselben. Je nach Energie der Laserstrahlung kann die Erwärmung so stark sein, dass Material vom Schutzorgan abgetragen wird bzw. verdampft.

Das abgetragene Material des Schutzorgans lagert sich zumindest teilweise an der den Hohlraum begrenzenden Wand an und führt somit zu einer unerwünschten Kontamination der inneren Oberfläche des Werkstücks, beispielsweise einer Kraftstoffeinspritzdüse. Weist das Schutzorgan z.B. Kupfer auf und ist die den Hohlraum begrenzende Wand aus Eisen oder Stahl gebildet, so hat es sich als nahezu unmöglich erwiesen, die Kupferanlagerungen von der Wand zu entfernen, ohne diese dabei zu beschädigen.

Ein erstes Verfahren ist aus der US-A-5 222 617 bekannt. Bei diesem Verfahren wird ein Gasturbinenblatt um einen Keramikkern gegossen. Nach dem Ausbilden von Bohrungen in dem Turbinenblatt mittels Laserbohren wird der Keramikkern durch einen nasschemischen Prozess aus dem Turbinenblatt entfernt.

Die US-A-6 070 813 lehrt ein Verfahren zur Herstellung einer in einen Hohlraum einer Kraftstoffeinspritzdüse mündenden Bohrung mittels Laserstrahlung, bei dem ein Wolfram aufweisendes Schutzorgan in den Hohlraum eingeführt wird, um die Energie der durch die Bohrung in den Hohlraum eintretenden Laserstrahlung zu absorbieren.

In der WO 2004/087364 A ist ein Verfahren zur Herstellung einer in einen Hohlraum einer Kraftstoffeinspritzdüse mündenden Bohrung mittels Laserstrahlung beschrieben, bei dem eine aus einem keramischen Material hergestellte Kugel in den Hohlraum eingeführt wird, um die Energie der durch die Bohrung in den Hohlraum eintretenden Laserstrahlung zu absorbieren.

Der Erfindung liegt die Aufgabe zugrunde, ein Verfahren der eingangs genannten Art zu schaffen, welches die Herstellung einer in einen Hohlraum eines Werkstücks mündenden Bohrung ohne wesentliche Beeinträchtigung der Beschaffenheit einer den Hohlraum begrenzenden Wand des Werkstücks ermöglicht.

Zur Lösung der Aufgabe ist ein Verfahren mit den Merkmalen des Anspruchs 1 und insbesondere die Durchführung einer nasschemischen Behandlung der Wand vorgesehen, um das angelagerte Material selektiv von der Wand zu entfernen. Dabei wird die chemische Behandlung mit einer alkalischen Lösung eines Oxidationsmittels durchgeführt.

Die Erfindung beruht auf der überraschenden Erkenntnis, dass es möglich ist, Materialien, die energiereiche Laserstrahlung nicht nur besonders gut absorbieren, sondern der Laserstrahlung auch besonders gut standhalten, gegenüber solchen Materialien selektiv abzutragen bzw. zu ätzen, die üblicherweise bei Kraftstoffeinspritzdüsen zum Einsatz kommen, wie beispielsweise Eisen oder Stahl. Unter selektivem Abtragen bzw. Ätzen wird im Sinne der Erfindung verstanden, dass sich das eine Material besonders gut entfernen lässt, während das andere Material im Wesentlichen nicht angegriffen bzw. abgetragen wird.

Sowohl Molybdän als auch Wolfram weisen besonders hohe Schmelztemperaturen auf. Wolfram hat mit einer Schmelztemperatur von 3380°C sogar die höchste Schmelztemperatur aller reinen Metalle. Ein diese Materialien aufweisendes Schutzorgan eignet sich also besonders gut zur Absorption energiereicher Laserstrahlung, d.h. es kann besonders hohen Energieeinträgen standhalten, bevor es zu schmelzen bzw. verdampfen beginnt. Die Lebensdauer eines solchen Schutzorgans ist deshalb noch weiter erhöht.

Darüber hinaus hat sich überraschenderweise herausgestellt, dass sich sowohl Molybdän als auch Wolfram trotz ihrer hohen Schmelztemperaturen selektiv bezüglich Eisen oder Stahl abtragen bzw. ätzen lassen. Beide Materialien sind durch die erfindungsgemäße chemische Nachbehandlung somit rückstandsfrei von einer Eisen oder Stahl aufweisenden Wand des Werkstücks entfernbar.

In der erfindungsgemäß vorgesehenen alkalischen Lösung eines Oxidationsmittels lassen sich insbesondere Molybdän- oder Wolfram-Anlagerungen besonders wirksam lösen. Dagegen ist Eisen oder Stahl gegenüber dieser Lösung passiv, d.h. es lässt sich nicht in der Lösung lösen. Dies ermöglicht eine bezüglich Eisen oder Stahl selektive Entfernung von Molybdän- oder Wolfram-Anlagerungen.

Der selektive Abtrag des an die den Hohlraum begrenzende Wand angelagerten Materials des Schutzorgans bedeutet mit anderen Worten eine Entfernung des Materials von der Wand, ohne dass die Wand selbst dabei angegriffen oder die Oberflächenbeschaffenheit der Wand auf sonstige Weise negativ beeinflusst wird. Die Erfindung ermöglicht somit nicht nur eine vollständige und rückstandsfreie, sondern auch eine besonders schonende Entfernung des Schutzorganmäterials von der den Hohlraum begrenzenden Wand des Werkstücks. Dies ist insbesondere dann von Vorteil, wenn die die Wand bereits vor der Herstellung der Bohrung in einen gewünschten Endzustand gebracht wurde, beispielsweise poliert wurde.

Die erfindungsgemäß vorgesehene chemische und insbesondere nasschemische Nachbehandlung des Werkstücks lässt sich, im Vergleich zu einer z.B. mechanischen Behandlung, besonders einfach durchführen. Das Werkstück und insbesondere die den Hohlraum begrenzende Wand muss lediglich mit einer geeigneten chemischen Substanz in Kontakt gebracht werden, und zwar so lange, bis das an der Wand angelagerte Schutzorganmaterial restlos mit der chemischen Substanz reagiert hat und in dieser gelöst ist.

Ist eine nasschemische Behandlung mittels einer chemischen Lösung vorgesehen, so kann eine Vielzahl von durchbohrten Werkstücken gleichzeitig in ein mit der chemischen Lösung gefülltes Becken eingetaucht werden. Dies ermöglicht eine schnelle Durchführung der Nachbehandlung einer großen Stückzahl von Werkstücken.

Im Ergebnis bedeutet die Durchführung einer chemischen Nachbehandlung folglich eine verbesserte Wirtschaftlichkeit der Herstellung von Bohrungen, insbesondere in Kraftstoffeinspritzdüsen, mittels Laserstrahlung.

Bevorzugte Ausbildungen der Erfindung sind den Unteransprüchen, der Beschreibung und der Zeichnung zu entnehmen.

Gemäß einer vorteilhaften Ausführungsform des erfindungsgemäßen Verfahrens weist das Schutzorgan ein die Laserstrahlung absorbierendes Material auf. Die Absorption der Laserstrahlung stellt eine besonders wirksame Möglichkeit zur Verringerung der Energie der durch die Bohrung in den Hohlraum eintretenden Laserstrahlung dar.

Bevorzugt weist das Schutzorgan ein Material mit einer besonders hohen Schmelz- und/oder Siedetemperatur auf. Ein derartiges Schutzorgan hält einer Bestrahlung mit energiereicher Laserstrahlung besonders gut stand. Mit anderen Worten wird lediglich eine minimale Menge von Material durch die auf das Schutzorgan auftreffende Laserstrahlung von dem Schutzorgan abgetragen. Durch den reduzierten Materialabtrag weist das Schutzorgan eine erhöhte Lebensdauer auf.

Darüber hinaus kann sich nur eine geringe Menge von Schutzorganmaterial an der den Hohlraum begrenzenden Wand des Werkstücks anlagern. Dies erleichtert die nachträgliche Entfernung des angelagerten Schutzorganmaterials von der Wand und verkürzt insbesondere die Dauer der chemischen Nachbehandlung. Insgesamt ist die Wirtschaftlichkeit des Verfahrens also noch weiter erhöht.

Vorteilhafterweise weist das Schutzorgan ein möglichst hohes Oxidationspotenzial und insbesondere ein Oxidationspotenzial von größer als -1 V, gemessen bezüglich einer Standardwasserstoffelektrode, auf. Ein zu negatives Oxidationspotenzial führt zu einer Oxidationsreaktion des Materials des Schutzorgans unter Laserbestrahlung, durch welche zusätzliche Wärme erzeugt würde und das Schutzorgan verbrennen könnte. Die Lebensdauer des Schutzorgans wird dadurch noch weiter erhöht und die Wirtschaftlichkeit des Verfahrens somit noch weiter verbessert.

Besonders bevorzugt ist es, wenn die chemische Behandlung mit einer Lösung mit pH > 9 durchgeführt wird. Es hat sich herausgestellt, dass eine derart basische Lösung Molybdän oder Wolfram besonders gut ätzt, Eisen oder Stahl dagegen jedoch nicht anzugreifen vermag. Mit einer derartigen Lösung wird die erfindungsgemäß vorgesehene Selektivität der Nachbehandlung also besonders gut erreicht.

Als vorteilhaft hat sich des Weiteren herausgestellt, wenn die alkalische Lösung Natriumhydroxid und/oder das Oxidationsmittel Wasserstoffperoxid, Natriumperoxid oder Natriumperoxodisulfat aufweist.

Die chemische Behandlung kann beispielsweise mit einer Lösung durchgeführt werden, welche im Verhältnis 10 g Natriumhydroxid (NaOH), 30 ml einer 30 %-igen Wasserstoffperoxid-Lösung (H₂O₂) und 70 ml Wasser aufweist.

Bevorzugt wird das Werkstück, beispielsweise während eines Zeitraums von etwa 5 min, vollständig in die Lösung eingetaucht oder der Hohlraum mit der Lösung ausgespült. Beide Varianten bedeuten eine besonders einfache Durchführung der chemischen Behandlung. Im Falle eines Eintauchens des Werkstücks in die Lösung können nach Art eines Batch-Verfahrens sogar mehrere Werkstücke gleichzeitig in die Lösung eingetaucht werden, wodurch die chemische Nachbehandlung mehrerer Werkstücke noch weiter beschleunigt und die Wirtschaftlichkeit des Verfahrens insgesamt noch weiter erhöht wird

Nachfolgend wird die Erfindung rein beispielhaft anhand einer vorteilhaften Ausführungsform unter Bezugnahme auf die Zeichnung beschrieben. Es zeigen:
- Fig. 1: die Anordnung eines Schutzorgans in einem Werkstück während der Herstellung einer Bohrung mittels Laserstrahlung; und
- Fig. 2: mehrere durchbohrte Werkstücke, die zur Durchführung einer nasschemischen Nachbehandlung in ein mit einer chemischen Lösung gefülltes Becken getaucht sind.

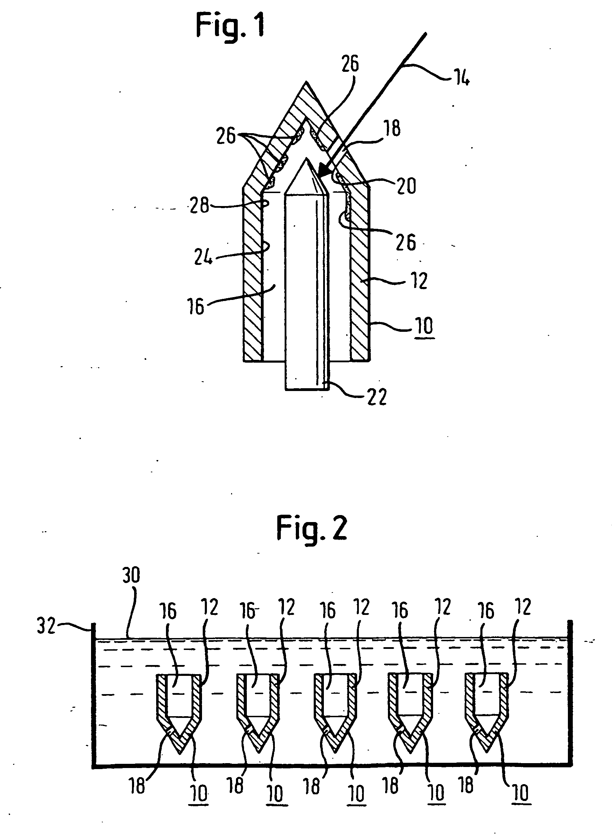

Fig. 1 zeigt ein Werkstück 10 mit einer Wand 12, welche mittels eines Laserstrahls 14 durchbohrt wird. Im vorliegenden Ausführungsbeispiel handelt es sich bei dem Werkstück 10 um eine aus einem Eisen- oder Stahlmaterial gebildete Kraftstoffeinspritzdüse.

Die Wand 12 begrenzt einen Hohlraum 16 des Werkstücks 10, in welchen die durch den Laserstrahl 14 erzeugte Bohrung 18 mündet. Der Bereich der Wand 12, in welchem die Bohrung 18 in den Hohlraum 16 mündet, wird nachfolgend als Mündungsbereich 20 bezeichnet.

Ein Schutzorgan 22 ist während des Bohrvorgangs in den Hohlraum 16 eingeführt, um zu verhindern, dass der aus der Bohrung 18 in den Hohlraum 16 eintretende Laserstrahl 14 auf einen dem Mündungsbereich 20 gegenüberliegenden Wandabschnitt 24 auftrifft und dort die Wand 12 beschädigt bzw. Material abträgt. Das Schutzorgan 22 ist zwischen dem Mündungsbereich 20 und dem gegenüberliegenden Wandabschnitt 24 angeordnet, so dass der in den Hohlraum 16 eintretende Laserstrahl 14 in das Schutzorgan 22 einkoppeln kann.

Durch das Schutzorgan 22 wird die Energie des eingekoppelten Laserstrahls 14 erheblich reduziert. Im dargestellten Ausführungsbeispiel beruht diese Energieverminderung auf einer zumindest teilweisen Absorption des Laserstrahls 14 durch das Schutzorgan 22. D.h. allenfalls ein minimaler Teil der eingekoppelten Laserstrahlung verlässt das Schutzorgan 22 wieder und dies auch nur in Form von energiearmer diffuser Strahlung, welche für die Wand 12 unschädlich ist.

Die Energie der absorbierten Laserstrahlung wird durch das Schutzorgan 22 in Wärme umgewandelt. Je nach Energie des Laserstrahls 14 und Dauer der Bestrahlung kann sich das Schutzorgan 22 so stark erwärmen, dass es aufschmilzt oder sogar verdampft.

Um die Lebensdauer des Schutzorgans 22 zu erhöhen, ist dieses aus einem Material gebildet, welches eine besonders hohe Schmelz- und/oder Siedetemperatur aufweist. Darüber hinaus weist das Material des Schutzorgans 22 ein besonders hohes Oxidationspotenzial und vorzugsweise ein Oxidationspotenzial von größer als -1 V, gemessen bezüglich einer Standardwasserstoffelektrode, auf, damit eine bei Erhitzung durch den Laserstrahl 14 mögliche Oxidationsreaktion verhindert wird, durch welche zusätzliche Wärme freigesetzt würde und das Schutzorgan 22 verbrennen würde.

Materialien, welche diese Anforderungen erfüllen, sind, gemäß der Erfindung, Molybdän und Wolfram. Die Schmelztemperatur von Wolfram liegt bei 3380°C und ist damit die höchste Schmelztemperatur aller reinen Metalle.

Damit das Schutzorgan 22 eine maximale Menge von Material aufweist, das für die Absorption der Laserstrahlung zur Verfügung steht, ist das Schutzorgan 22 massiv, d.h. nicht hohl, ausgebildet. Durch die massive Ausbildung des Schutzorgans 22 ist außerdem die Stabilität des Schutzorgans 22 erhöht. Das Schutzorgan 22 kann beispielsweise eine Stab- oder Drahtform aufweisen.

Trotz der voranstehend genannten vorteilhaften Eigenschaften von Wolfram bzw. Molybdän lässt sich nicht vermeiden, dass durch den Laserstrahl 14 auch von dem aus diesen Materialen gebildeten Schutzorgan 22 Material abgetragen bzw. verdampft wird.

Das von dem Schutzorgan 22 abgetragene Material lagert sich zumindest teilweise an der zum Hohlraum 16 weisenden Innenseite 28 der Wand 12 an. Dabei kann sich das abgetragene bzw. verdampfte Material des Schutzorgans 22 in Form von lokal begrenzten inselförmigen Anlagerungen 26, wie sie in Fig. 1 dargestellt sind, an der Wand 12 niederschlagen, oder es kann die Wand 12 in Form einer gleichmäßigen Schicht bedecken.

In beiden Fällen bedeutet die Anlagerung des abgetragenen bzw. verdampften Schutzorganmaterials an der Wand 12 eine unerwünschte Beeinträchtigung der Oberflächenbeschaffenheit bzw. Oberflächenqualität der dem Hohlraum 16 zugewandten Innenseite 28 der Wand 12. Dies gilt umso mehr, wenn die Innenseite 28 der Wand 12 bereits vor dem Laserbohrvorgang in einen gewünschten Endzustand gebracht wurde, beispielsweise poliert oder auf sonstige Weise veredelt wurde.

Um die Wolfram- bzw. Molybdän-Anlagerungen 26 nach dem Bohrvorgang von der Wand 12 zu entfernen, ist erfindungsgemäß eine chemische Behandlung der Wand 12 und insbesondere der Innenseite 28 der Wand 12 vorgesehen. Die chemische Behandlung beruht bei dem dargestellten Ausführungsbeispiel auf einer alkalischen Lösung 30 eines Oxidationsmittels, mit welcher der Hohlraum 16 des Werkstücks 10 nach dem Bohrvorgang ausgespült wird oder in welche das gesamte Werkstück 10 eingetaucht wird. Fig. 2 zeigt einen mit einer solchen alkalischen Lösung 30 gefüllten Behälter 32 und mehrere durchbohrte Werkstücke 10, die gleichzeitig in die Lösung 30 eingetaucht sind.

Im vorliegenden Ausführungsbeispiel weist die Lösung 30 im Verhältnis 10 g Natriumhydroxid (NaOH), 30 ml einer 30 %-igen Wasserstoffperoxid-Lösung (H₂O₂) und 70 ml Wasser auf.

Die Wolfram- bzw. Molybdän-Anlagerungen 26 der der Lösung 30 ausgesetzten Werkstücke 10 werden gemäß der folgenden chemischen Reaktion in der Lösung 30 gelöst:

M + 3H₂O₂ + 2NaOH → Na₂MO₄ + 4H₂O, (1)

wobei M für das Metall Wolfram oder Molybdän steht.

Die Reaktion der Lösung 30 mit den Wolfram- bzw. Molybdän-Anlagerungen 26 kann aber auch zu der Bildung eines Metalloxids MO₃ führen, welches nicht in der Lösung 30 lösbar ist, sondern eine Passivierung der Wolfram- bzw. Molybdän-Anlagerungen 26 und somit deren Resistenz gegenüber der chemischen Behandlung bedeutet. Zwischen dem Anion MO₄(2-) und dem Oxid MO₃ besteht die folgende Beziehung:

MO₃ + H₂O ↔ MO₄(2-) + 2H(+). (2)

Die Reaktion (1) läuft grundsätzlich im gesamten pH-Bereich ab.

Bei pH-Werten von pH < 3 für Molybdän und pH < 7 für Wolfram liegt das Gleichgewicht der Gleichung (2) jedoch auf der linken Seite, d.h. es findet verstärkt eine Oxidbildung statt, vorausgesetzt, alle Stoffe liegen in Einheitskonzentration vor. Mit anderen Worten werden die Wolfram- bzw. Molybdän-Anlagerungen 26 bei diesen niedrigen pH-Werten zumindest teilweise passiviert. Diese Passivierung und der sich daraus ergebende Widerstand gegenüber Korrosion führen dazu, dass sich die Wolfram- bzw. Molybdän-Anlagerungen 26 durch eine Lösung 30, die einen derartig niedrigen pH-Wert aufweist, nicht restlos entfernen lassen.

Erst bei größeren pH-Werten, nämlich bei pH > 3 für Molybdän und pH > 7 für Wolfram liegt das Gleichgewicht der Gleichung (2) auf der rechten Seite, d.h. auf der Seite des löslichen Anions MO₄(2-). Weist die Lösung 30 also derart erhöhte pH-Werte auf, findet keine wesentliche Passivierung der Anlagerungen 26 statt. Diese lassen sich folglich restlos von der Wand 12 entfernen.

Solange die Lösung 30 einen pH-Wert von pH < 9 aufweist, wird jedoch auch die Wand 12 des aus Eisen oder Stahl gebildeten Werkstücks 10 durch die Lösung 30 angegriffen.

Eisen oder Stahl ist erst dann gegenüber der Lösung 30 passiv, wenn die Lösung 30 einen pH-Wert von pH > 9 aufweist. Wird die Lösung 30 also auf pH > 9 eingestellt, so liegt nicht nur eine optimale Löslichkeit des Wolframs bzw. Molybdäns in der Lösung 30, sondern auch eine Passivität von Eisen bzw. Stahl gegenüber der Lösung 30 vor. Dies ermöglicht eine selektive Entfernung der Anlagerungen 26 von der Wand 12, d.h. die Wand 12 bleibt unversehrt, während die Anlagerungen 26 restlos entfernt werden.

Wird eine Lösung 30 mit dem voranstehend genannten Mischungsverhältnis verwendet, so hat es sich als ausreichend erwiesen, das Werkstück 10 für einen Zeitraum von etwa 5 min der Lösung 30 auszusetzen, um ein optimales Reinigungsergebnis, d.h. eine restlose Entfernung der Anlagerungen 26, zu erreichen.

Nach der chemischen Behandlung mit der Lösung 30 brauchen die Werkstücke 10 nur noch in Wasser gespült, getrocknet und gegebenenfalls geölt zu werden.

### Bezugszeichenliste

- 10: Werkstück
- 12: Wand
- 14: Laserstrahl
- 16: Hohlraum
- 18: Bohrung
- 20: Mündungsbereich
- 22: Schutzorgan
- 24: Wandabschnitt
- 26: Anlagerung
- 28: Innenseite
- 30: Lösung
- 32: Behälter

## Patentansprüche

1. Verfahren zur Herstellung einer in einen Hohlraum (16) eines Werkstücks (10), insbesondere einer Kraftstoffeinspritzdüse, mündenden Bohrung (18), bei dem
die Bohrung (18) mittels Laserstrahlung (14) erzeugt wird;
ein Schutzorgan (22), welches Molybdän oder Wolfram aufweist, zwischen einem Mündungsbereich (20) einer den Hohlraum (16)begrenzenden Wand (12) des Werkstücks (10), in welchem die fertige Bohrung (18) in den Hohlraum (16) mündet, und einem dem Mündungsbereich (20) gegenüberliegenden Abschnitt (24) der Wand (12) angeordnet wird; und
die Energie der durch die Bohrung (18) in den Hohlraum (16) eintretenden Laserstrahlung (14) durch das Schutzorgan (22) verringert wird, wobei Material von dem Schutzorgan (22) abgetragen wird und sich zumindest teilweise an der Wand (12) anlagert,
**dadurch gekennzeichnet, dass**
eine chemische Behandlung der Wand (12) durchgeführt wird, um das angelagerte Material (26) selektiv von der Wand (12) zu entfernen wobei die chemische Behandlung mit einer alkalischen Lösung (30) eines Oxidationsmittels durchgeführt wird.

2. Verfahren nach Anspruch 1,
**dadurch gekennzeichnet, dass**
das Schutzorgan (22) ein die Laserstrahlung (14) absorbierendes Material aufweist.

3. Verfahren nach Anspruch 1 oder 2,
**dadurch gekennzeichnet, dass**
das Schutzorgan (22) ein Material mit einer hohen Schmelz- und/oder Siedetemperatur aufweist.

4. Verfahren nach einem der vorherigen Ansprüche,
**dadurch gekennzeichnet, dass**
das Schutzorgan (22) ein möglichst hohes Oxidationspotenzial und insbesondere ein Oxidationspotenzial von größer als -1 V, gemessen bezüglich einer Standardwasserstoffelektrode, aufweist.

5. Verfahren nach einem der vorherigen Ansprüche,
**dadurch gekennzeichnet, dass**
die Lösung (30) einen pH-Wert von pH > 9 aufweist.

6. Verfahren nach einem der vorherigen Ansprüche,
**dadurch gekennzeichnet, dass**
die alkalische Lösung (30) Natriumhydroxid aufweist und/oder dass das Oxidationsmittel Wasserstoffperoxid, Natriumperoxid oder Natriumperoxodisulfat aufweist.

7. Verfahren nach einem der vorherigen Ansprüche,
**dadurch gekennzeichnet, dass**
die chemische Behandlung mit einer Lösung (30) durchgeführt wird, welche im Verhältnis 10 g Natriumhydroxid (NaOH), 30 ml einer 30 %-igen Wasserstoffperoxid-Lösung (H₂O₂) und 70 ml Wasser aufweist.

8. Verfahren nach einem der vorherigen Ansprüche,
**dadurch gekennzeichnet, dass**
das Werkstück (10), beispielsweise während eines Zeitraums von etwa 5 min, vollständig in die Lösung (30) eingetaucht wird oder dass der Hohlraum (16) mit der Lösung (30) ausgespült wird.

## Claims

1. A method for the manufacture of a bore (18) opening into a hollow space (16) of a workpiece (10), in particular of a fuel injection nozzle, wherein
the bore (18) is produced by means of laser radiation (14);
a protective member (22) comprising molybdenum or tungsten is arranged between an opening region (20) of a wall (12) of the workpiece (10) bounding the hollow space (16), in which the finished bore (18) opens into the hollow space (16), and a section (24) of the wall (12) disposed opposite the opening region (20); and
the energy of the laser radiation (14) entering into the hollow space (16) through the bore (18) is reduced by the protective member (22), with material being removed from the protective member (22) and accumulating at least partly on the wall (12);
**characterized in that**
a chemical treatment of the wall (12) is carried out to selectively remove the accumulated material (26) from the wall (12),
with the chemical treatment being carried out using an alkaline solution (30) of an oxidation agent

2. A method in accordance with claim 1, **characterized in that** the protective member (22) comprises a material absorbing the laser radiation (14).

3. A method in accordance with claim 1 or claim 2, **characterized in that** the protective member (22) comprises a material having a particularly high melting temperature and/or boiling temperature.

4. A method in accordance with any one of the preceding claims, **characterized in that** the protective member (22) has an oxidation potential which is as high as possible and in particular an oxidation potential of more than -1 V, measured with respect to a standard hydrogen electrode.

5. A method in accordance with any one of the preceding claims, **characterized in that** the solution (30) has a pH value of pH > 9.

6. A method in accordance with any one of the preceding claims, **characterized in that** the alkaline solution (30) comprises sodium hydroxide; and/or **in that** the oxidation agent comprises hydrogen peroxide, sodium peroxide or sodium peroxidisulfate.

7. A method in accordance with any one of the preceding claims, **characterized in that** the chemical treatment is carried out using a solution which has a ratio of 10 g sodium hydroxide (NaOH), 30 ml of a 30% hydrogen peroxide solution (H₂O₂) and 70 ml water.

8. A method in accordance with any one of the preceding claims 9, **characterized in that** the workpiece (10) is fully immersed into the solution (30), for example over a period of approximately 5 min; or **in that** the hollow space (16) is flushed with the solution (30).

## Revendications

1. Procédé pour produire un perçage (18) débouchant dans une cavité (16) d'une pièce (10), en particulier d'un injecteur de carburant, dans lequel :
on produit le perçage (18) au moyen d'un rayonnement laser (14);
on agence un organe de protection (22), contenant du molybdène ou du tungstène, entre une zone d'embouchure (20) d'une paroi (12) délimitant la cavité (16) de la pièce (10), dans laquelle le perçage fini (18) débouche dans la cavité (16), et une section (24) de paroi (12) en regard de la zone d'embouchure (20); et
l'énergie du rayonnement laser (14) pénétrant par le perçage (18) dans la cavité (16) est diminuée par l'organe de protection (22), ce par quoi du matériau est enlevé de l'organe de protection (22) et se dépose au moins partiellement sur la paroi (12),
**caractérisé en ce que**
on réalise un traitement chimique de la paroi (12) pour éliminer de manière sélective le matériau déposé (26) de la paroi (12), le traitement chimique étant effectué avec une solution alcaline (30) d'un agent d'oxydation.

2. Procédé selon la revendication 1, **caractérisé en ce que**
l'organe de protection (22) contient un matériau absorbant le rayonnement laser (14).

3. Procédé selon la revendication 1 ou 2, **caractérisé en ce que**
l'organe de protection (22) contient un matériau ayant une température de fusion et/ou d'ébullition élevée.

4. Procédé selon l'une quelconque des revendications précédentes, **caractérisé en ce que**
l'organe de protection (22) présente un potentiel d'oxydation le plus élevé possible et, en particulier, un potentiel d'oxydation supérieur à -1 V, mesuré par rapport à une électrode à hydrogène standard.

5. Procédé selon l'une quelconque des revendications précédentes, **caractérisé en ce que**
la solution (30) présente une valeur de pH > 9.

6. Procédé selon l'une quelconque des revendications précédentes, **caractérisé en ce que**
la solution alcaline (30) contient de l'hydroxyde de sodium et/ou **en ce que** l'agent d'oxydation contient du peroxyde d'hydrogène, du peroxyde de sodium ou du peroxodisulfate de sodium.

7. Procédé selon l'une quelconque des revendications précédentes, **caractérisé en ce que**
le traitement chimique est effectué à l'aide d'une solution (30) qui contient au prorata 10 g d'hydroxyde de sodium (NaOH), 30 ml d'une solution de peroxyde d'hydrogène à 30% (H₂O₂) et 70 ml d'eau.

8. Procédé selon l'une quelconque des revendications précédentes, **caractérisé en ce que**
on immerge la pièce (10), par exemple pendant une durée d'environ 5 mn, entièrement dans la solution (30) ou **en ce que** l'on rince la cavité (16) avec la solution (30).
